Europäisches Patentamt

European Patent Office

Office européen des brevets

(11) Publication number: **0 088 987**
**B1**

# EUROPEAN PATENT SPECIFICATION

(45) Date of publication of patent specification: **14.09.88**

(51) Int. Cl.⁴: **B 23 C 5/22**

(21) Application number: **83102259.5**

(22) Date of filing: **08.03.83**

(54) A sprocket cutter and method of assembling.

(30) Priority: **17.03.82 US 358911**

(43) Date of publication of application:
**21.09.83 Bulletin 83/38**

(45) Publication of the grant of the patent:
**14.09.88 Bulletin 88/37**

(84) Designated Contracting States:
**BE DE FR GB IT SE**

(56) References cited:
**DE-B-1 752 586**
**GB-A-2 006 073**
**US-A-3 103 736**
**US-A-3 200 474**
**US-A-3 540 103**
**US-A-3 707 748**
**US-A-3 740 808**

**Patent Abstracts of Japan vol. 4, no. 76, 3 June
1980 page 39M14 & JP-A-55-37207**

(73) Proprietor: **KENNAMETAL INC.**
**One Lloyd Avenue P.O. Box 231**
**Latrobe Pennsylvania 15650 (US)**

(72) Inventor: **Torgent, Douglas E.**
**291 Newton Road**
**Raleigh North Carolina 27609 (US)**
Inventor: **Mitchell, Robert N.**
**4614 Connell Drive**
**Raleigh North Carolina 27612 (US)**

(74) Representative: **Leiser, Gottfried, Dipl.-Ing. et al**
**Patentanwälte Prinz, Leiser, Bunke & Partner**
**Manzingerweg 7**
**D-8000 München 60 (DE)**

Courier Press, Leamington Spa, England.

## Description

This invention is related to the field of metal cutting tools and, more specifically, to the field of milling cutters. Most specifically, this invention has application to a very special type of milling cutter especially useful in cutting sprockets.

As is known in the prior art, a sprocket cutter has a number of stations at which there are means for cutting the contour of a sprocket. The cutting means is typically a number of cutter buttons or round inserts with their cutting edges arranged in the shape of the sprocket contour. The inserts at each station are slightly displaced parallel to the axis of rotation from the inserts at every other station. In this way, a complete revolution will cause the entire sprocket contour to be contacted by the cutting edges of the inserts.

In the past, in cutters for cutting complex contours, the inserts have been attached directly to the cutter body by means of screws or similar fastening means in conjunction with a hole in the center of the insert, see for example, US—A—3,103,736. A problem with this type of fastening means is that the inserts are difficult to position precisely and that, during use, the inserts may wobble slightly, or even loosen, thereby causing loss of tolerance.

It is thus desirable to have an insert that will not loosen during use. The present invention proceeds from a cutter disclosed in US—A—3, 200,474. In this cutter a cutter body has a plurality of pockets along its periphery. An array of inserts is disposed within each pocket. A plurality of wedges equal in number to the number of inserts is provided, and each wedge is interposed between each insert and the corresponding pocket, so that as each wedge is moved inwardly into its corresponding pocket, each insert is securely clamped between its corresponding wedge and an abutment face of the pocket. The cutting portion of each insert extends beyond the periphery of the cutter body. The inserts are aligned for cutting a segment of the contour as the cutter body rotates with adjacent segments of the contour being cut by inserts located in different pockets. The cutter further includes cartridges for insertion into each pocket. The number of cartridges corresponds to the number of cutter body pockets for insertion into each of said pockets. Each of the cartridges has an insert receiving portion and a rear portion and each pocket has a plurality of wedge recesses facing the periphery of the cutter body and equal in number to the wedges and inserts. The cartridges are interposed in the rotational sense in each pocket between the array of inserts and the pocket so that each of the inserts abuts the abutment surface of the cartridge and is securely clamped thereon by the wedges. Each cartridge has seating means for locating the inserts so that there are cutting portions follow the contour to be cut. This conventional cutter is adapted for cutting rather simple contours only.

It is not suitable for cutting complex contours such as sprocket contours.

The present invention provides a contour cutter which is suitable for cutting complex sprocket contours.

According to the invention, the seating means of each cartridge comprise a succession of V-shaped locating surfaces having angular orientations to position the cutting portions of the inserts along a curve corresponding to the contour of a sprocket, and the inserts have a substantial length of their cutting portions which is arcuate, the number of V-shaped locating surfaces being equal to the number of inserts.

Advantageous embodiments of the inventive sprocket cutter are defined in claims 2 and 6.

In another aspect of the invention, a cutter cartridge as used in a contour cutter defined in any of claims 1 to 6 is provided.

In a still further aspect of the invention, a method of assembling a contour cutter is provided wherein the contour cutter has a cutter body with a plurality of pockets, a plurality of cartridges equal in number to the number of pockets and having a rear portion and a plurality of insert seating portions, and a plurality of wedges equal in number to the number of inserts, the method comprising inserting a cartridge into a pocket of the cutter body and casuing the locating surfaces on the rear portion of the cartridge to abut to similar locating surfaces in the pocket; the method being characterized by providing each insert with a succession of V-shaped locating surfaces having angular orientations to position the cutting portions of the inserts along a curve corresponding to the contour of a sprocket, providing the inserts with a substantial length of their cutting portions in arcuate shape, locating each insert with respect to a V-shaped locating surface at the rear of each insert seating position; interposing a wedge between each insert and the corresponding pocket such that upon moving each wedge inwardly each insert will be securely clamped; and repeating each step a number of times equal to the number of pockets in the cutter body; each cartridge having shim recesses equal in number to the number of inserts, and each of the two locating surfaces of the pocket converging towards the periphery of the cutter body, the method further comprising locating a shim into each shim recess of the cartridge such that the shim protrudes slightly above said shim recess, and placing each insert in a respective insert seating position on top of each shim.

The exact nature of the present invention will become more clearly apparent upon reference to the following detailed description of the invention taken in connection with the accompanying drawings in which:

Figure 1 is a side view of a cutter body showing one pocket.

Figure 2 is an enlarged view of the pocket in Figure 1.

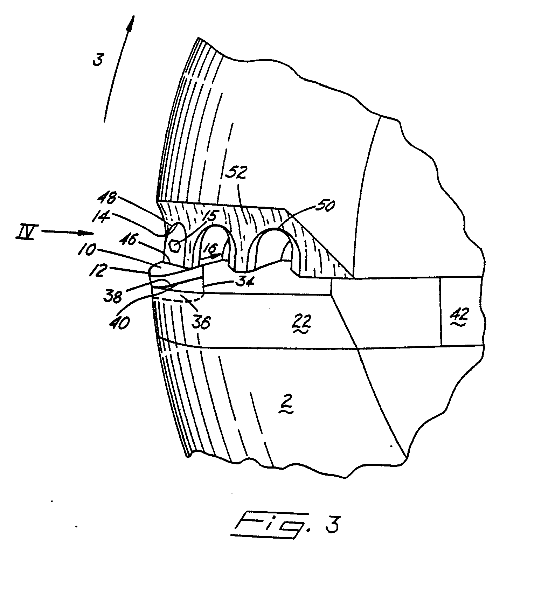

Figure 3 is a view of the pocket of Figure 2 with a cartridge but showing only one insert and one wedge.

Figure 4 is a view from the left of Figure 3 showing a cartridge with a full array of inserts and corresponding wedges.

Figure 5 is a view taken along the line V—V of Figure 4.

Figure 6 is a view taken along the line VI—VI of Figure 5.

Figure 7 is a partial view of the station shown in Figure 5.

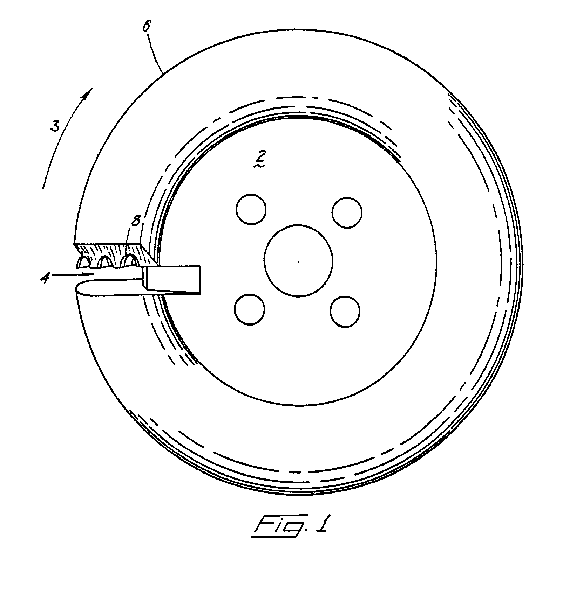

Referring to the drawings more in detail, Figure 1 illustrates the cutter body 2 with only one pocket 4 shown. In this invention, there are preferably 14 such pockets, but there may be any number of pockets, depending upon the tolerance and surface finish required. The cutter body rotates in the direction of rotation 3.

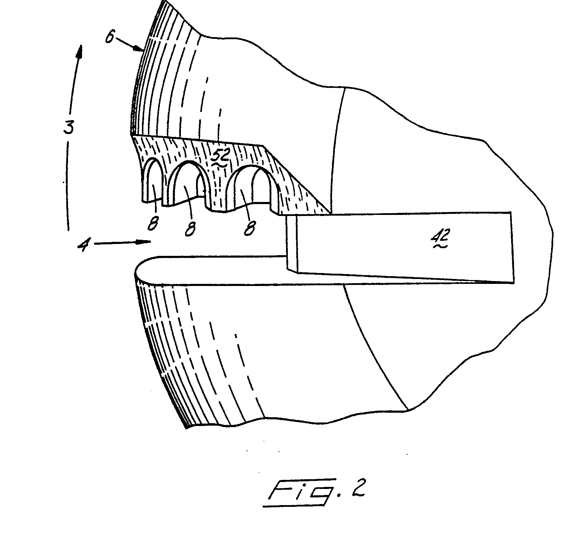

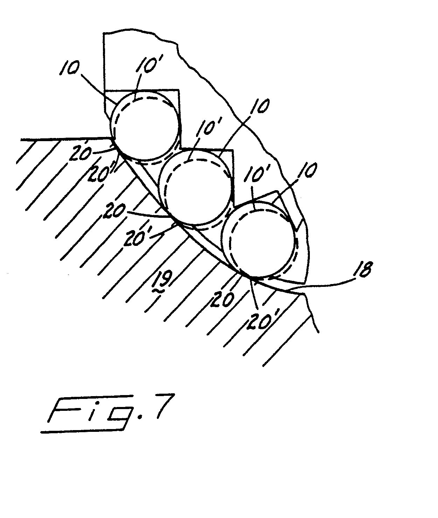

Referring now to Figures 2 and 7 there is disclosed a sprocket cutter comprising a cutter body 2 having a plurality of pockets 4 along its periphery 6 and a plurality of wedge recesses 8 facing the periphery within each pocket. There is an array of inserts 10 disposed within each of the pockets, each of the inserts having a cutting portion 12. There is also a plurality of wedges 14 equal in number to the number of inserts 10 and wedge recesses 8. Each of the wedges 14 is interposed between each of the inserts 10 and each of the wedge recesses 8 so that as each of the wedges is moved inwardly, as shown by arrow 16, into its corresponding wedge recess each of the inserts is securely clamped between its corresponding wedge and the pocket. Each of the inserts is positioned so that the cutting portion of each insert extends beyond the periphery of the cutter body. Each of the inserts cuts a segment of the sprocket contour 18 of the sprocket 19 as the cutter body rotates with adjacent segments of the sprocket contour being cut by inserts located in different pockets.

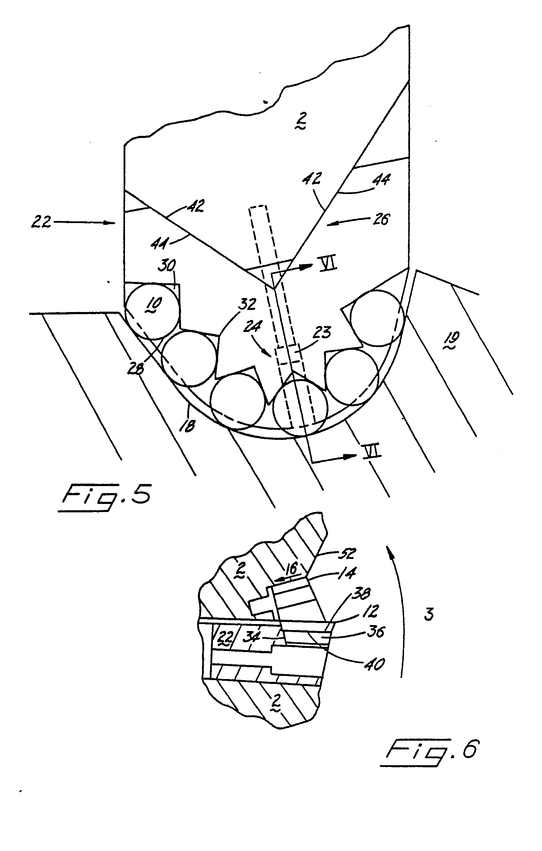

The array of inserts within each station is the sum total of the individual positions of each insert. As shown in Figure 5, the inserts are arrayed so as to form the shape of a sprocket contour. However, it is contemplated within the scope of this invention that the inserts may be arrayed to form any complex contour.

Figure 7 shows a portion of the station of Figure 5. A station is the cutter body pocket with its accompanying hardware. Inserts 10 each cut segment 20 from the sprocket contour 18. Some other station with inserts 10' shown in dotted lines in Figure 7 would cut an adjacent segment 20' from the sprocket contour 18. Adjacent segments 20 and 20' would be cut by different stations which would not necessarily be adjacent. That is, the station that cuts segments 20' could be the one, but not necessarily so, that next follows the station that cuts segments 20.

There is a plurality of cartridges 22 corresponding to the number of cutter body pockets 4 for insertion into each of the pockets. Each of the cartridges has an insert receiving portion 24 and a rear portion 26. The cartridges are interposed in each pocket between the array of inserts and the pocket so that each of the inserts abuts the top surface 28 of the insert receiving portion 24, and is securely clamped thereon by the wedges 14.

The cartridge may be securely held in the cutter body as by fastening means 23. The wedges may be moved inwardly and tightened as by fastening means 15.

Preferably, the insert receiving portion 24 comprises a plurality of insert seating positions 30 equal in number to the number of inserts 10 in the array of inserts. Each of the insert seating positions has a V-shaped surface 32 for accurately receiving and locating each of the inserts.

Preferably, also, the insert receiving portion further comprises a shim recess 34 and shim 36 located rearwardly in the rotational sense from each of the insert seating positions so that the bottom 38 of each of the inserts will abut the top 40 of each of the shims 36.

Preferably, each of the pockets has a pair of locating surfaces 42 abutting with a pair of locating surfaces 44 of the rear portion 26 of each of the cartridges 22. The pocket locating surfaces 42 and the cartridge locating surface 44 similarly converge toward the periphery of the cutter body 2.

It is most preferable that each of the wedges has a flat bearing surface 46 for engagement with each of the inserts 10 and a rounded surface 48 opposite the flat bearing surface for engagement with a similarly rounded surface 50 of the wedge recess 8.

In the sprocket cutter as disclosed, the wedges firmly position the inserts against the cartridges. The use of the cartridge is advantageous also in that it permits to avoid expensive machining on the cutter body.

It is preferable that each of the pockets has a chip gash portion 52 forward in the rotational sense of the array of inserts. The radius of the cutter body is reduced at each of the chip gash portions 52.

It is most desirable to have a chip gash portion in that it allows movement of the cut chip away from the cutter body thereby preventing the washing away of the cutter body.

It is most preferred that each of the inserts is round.

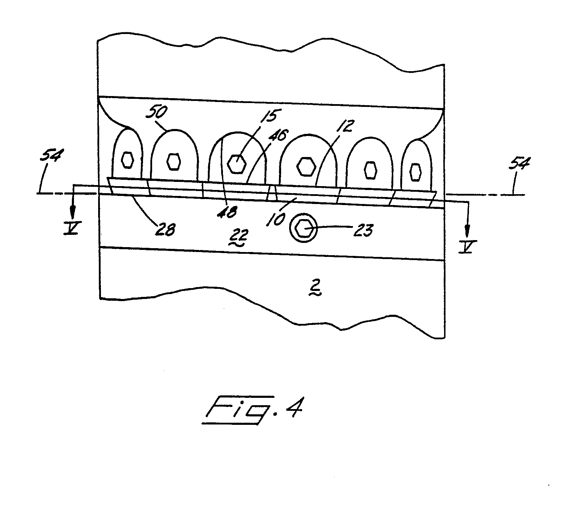

As best seen in Figure 4, the inserts are slightly skewed so that their cutting portions are not parallel to the axis of rotation 54 of the cutter body. It has been found that when the cutting portions of the inserts are at an angle to the axis of rotation, the possibility of chatter is eliminated.

The cutter cartridge constitutes a separate article of commerce, comprising an insert receiving portion 24 and a rear portion 26. Each insert receiving portion has a plurality of insert seating positions 30, each of which has a V-shaped surface for accurately receiving and locating a cutting insert.

The insert receiving portion further comprises a shim recess 34 and shim 36 located rearwardly in the rotational sense from each of the insert seating positions. It is also preferable that the rear portion 24 of the cartridge has a pair of locating surfaces 44 converging toward the insert receiving portion 24 of the cartridge.

The method of assembling a sprocket cutter of the type having a cutter body having a plurality of pockets and wedge recesses will now be disclosed. It is also of the type having a plurality of cartridges equal in number to the number of pockets and having a rear portion, a plurality of insert seating positions and shim recesses, both equal in number to the number of wedge recesses. The sprocket cutter is further of the type having a plurality of wedges equal in number to the number of wedge recesses. The method comprises inserting a cartridge 22 into a pocket 4 of the cutter body 2 and causing the two locating surfaces 44 on the rear portion 26 of the cartridge to abut two similar locating surfaces 42 in the pocket, each of the two locating surfaces converging toward the periphery of the cutter body, then locating a shim into each shim recess of the cartridge such that the shim protrudes slightly above the shim recess. The method further comprises placing an insert into each insert seating position 30 and on top of each shim 36 and locating each insert with respect to a V-shaped locating surface 32 at the rear of each insert seating position. A further step is interposing a wedge 14 between each insert and each wedge recess 8 such that upon moving each wedge inwardly as shown by arrow 16, each insert will be securely clamped. The method is completed by repeating each step a number of times equal to the number of pockets in the cutter body.

**Claims**

1. A contour cutter comprising: a cutter body (2) having a plurality of pockets (4) along its periphery; an array of inserts (10) disposed within each of said pockets (4), each of said inserts (10) having a cutting portion (12); and a plurality of wedges (14) equal in number to the number of inserts (10), each of said wedges (14) interposed between each of said inserts (10) and said pocket (4) so that as each of said wedges (14) is moved inwardly into its corresponding pocket (4), each of said inserts (10) is securely clamped between its corresponding wedge (14) and said pocket (4), each of said inserts (10) capable of being positioned so that said cutting portion (12) of each insert (10) extends beyond the periphery of said cutter body (2), each of said inserts (10) aligned for cutting a segment of the contour as said cutter body (2) rotates with adjacent segments of the contour being cut by inserts (10) located in different pockets (4), and a plurality of cartridges (22) corresponding to the number of cutter body pockets (4) for insertion into each of said pockets (4), each of said cartridges (22) having an insert receiving portion (24) and a rear portion (26), each pocket (4) having a plurality of wedge recesses (8) facing the periphery of said cutter body (2) and equal in number to the wedges (14) and inserts (10), said cartridges (22) being interposed in the rotational sense in each pocket (4) between said array of inserts (10) and said pocket (4) so that each of said inserts (10) abuts the abutment surface (28) of the cartridge (22) and is securely clamped thereon by said wedges (14), each of said cartridges (22) having seating means (30) for locating said inserts (10), characterised in that said seating means (30) of each cartridge (22) comprise a succession of V-shaped locating surfaces (32) having angular orientations to position the cutting portions (12) of said inserts (10) along a curve (18) corresponding to the contour of a sprocket and in that said inserts (10) have a substantial length of their cutting portions (12) which is arcuate, the number of V-shaped locating surfaces (32) being equal to the number of inserts (10).

2. The cutter of claim 1 wherein said insert receiving portion (24) further comprises a shim recess (34) and shims (36) located rearwardly, in the rotational sense, from each of said insert seating positions (30) so that the bottom of each of said inserts (10) will abut the top of each of said shims (36).

3. The cutter of claim 2 wherein each of said pockets (4) has a pair of locating surfaces (42) abutting with a pair of locating surfaces (44) of said rear portion (26) of each of said cartridges (22), said pocket locating surfaces (42) and said cartridge locating surfaces (44) similarly converging toward said periphery of said cutter body (2).

4. The cutter of claim 1 or 3 wherein each of said wedges (14) has a flat bearing surface (46) for engagement with each of said inserts (10) and a rounded surface (48) opposite said flat bearing surface (46) for engagement with a similarly rounded surface of said wedge recess (8).

5. The contour cutter of claim 4 wherein each of said pockets (4) has a chip gash portion (52) forward, in the rotational sense, of said array of inserts (10), the radius of said cutter body (2) being reduced at each of said chip gash portions (52).

6. The contour cutter of claim 5 wherein each of said inserts (10) is round.

7. A cutter cartridge as used in a contour cutter as defined in any of claims 1 to 6.

8. A method of assembling a contour cutter according to claim 1 of the type having a cutter body (2) having a plurality of pockets (4), a plurality of cartridges (22), equal in number to the number of pockets (4), and having a rear portion (26) and a plurality of insert seating positions (30), and a plurality of wedges (14) equal in number to the number of inserts (10) comprising: inserting a cartridge (22) into a pocket (4) of the cutter body (2) and causing the locating surfaces (42) on the rear portion (26) of the cartridge (22) to abut two similar locating surfaces (44) in the pocket (4); characterized by providing each insert with a succession of V-shaped locating surfaces (32) having angular orientations to position the cutting portions (12) of the inserts (10) along a curve (18) corresponding to the contour of a sprocket,

providing said inserts (10) with a substantial length of their cutting portions (12) in arcuate shape, locating each insert (10) with respect to a V-shaped locating surface (32) at the rear of each insert seating position (30); interposing a wedge (14) between each insert (10) and the corresponding pocket (4) such that upon moving each wedge (14) inwardly, each insert (10) will be securely clamped; and repeating each step a number of times equal to the number of pockets (4) in the cutter body (2); each cartridge (22) having shim recesses (34) equal in number to the number of inserts (10), and each of the two locating surfaces (42) of the pocket (4) converging toward the periphery of the cutter body (2), the method further comprising locating a shim (36) into each shim recess (34) of the cartridge (22) such that the shim (36) protrudes slightly above said shim recess (34) and placing each insert (10) in a respective insert seating position (30) on top of each shim (34).

**Patentansprüche**

1. Ein Konturenfräser mit: einem Fräserkörper (2), der entlang seines Umfanges mehrere Fächer (4) aufweist; einer Reihe von Einsätzen (10), die jeweils innerhalb der Fächer (4) angeordnet sind, wobei jeder der Einsätze (10) einen Schneidteil (12) aufweist; und mit mehreren Keilen (14), deren Anzahl gleich der der Einsätze (10) ist, wobei jeder der Einsätze (10) fest zwischen seinem ihm entsprechenden Keil (14) und einem Fach (4) eingeklemmt ist, wobei jeder dieser Einsätze (10) derart ausgerichtet werden kann, daß der Schneidteil (12) jedes Einsatzes (10) über den Außenrand des Fräserkörpers (2) herausragt, wobei jeder dieser Einsätze (10) derart ausgerichtet ist, daß ein Segment mit der Kontur ausgefräst wird, wenn dieser Fräserkörper (2) sich dreht, wobei aneinander angrenzende Segmente der Kontur von verschiedenen Einsätzen (10), die in verschiedenen Fächern (4) angeordnet sind, ausgefräst werden, und mit mehreren der Anzahl der Fächer (4) des Fräserkörpers entsprechenden Klemmhaltern (22) zum Einführen in jedes dieser Fächer (4), wobei jeder Klemmhalter (22) einen Einsatz-Aufnahmeteil (24) und einen hinteren Teil (26) aufweist, wobei jedes Fach (4) mehrere Keil-Taschen (8) aufweist, die in Richtung Außenrand des Fräserkörpers (2) zeigen und deren Anzahl gleich derjenigen der Keile (14) und Einsätze (10) ist, wobei die Klemmhalter (22), in Drehrichtung gesehen, in jedem Fach (4) zwischen dieser Reihe der Einsätze (10) und diesen Fächern (4) zwischengefügt sind, so daß jeder dieser Einsätze (10) mit der Widerlageroberfläche (28) des Klemmhalters (22) in Eingriff steht und mittels dieser Keile (14) fest darauf geklemmt ist, wobei jeder dieser Klemmhalter (22) einen Sitz (30) zur Lagebestimmung dieser Einsätze (10) aufweist, dadurch gekennzeichnet, daß dieser Sitz (30) eines jeden Klemmhalters (22) eine Anzahl V-förmiger Lagebestimmungsflächen (32) enthält, durch deren Winkelorientierungen die Schneidteile (12) dieser Einsätze (10) entlang einer Kurve (18), die der Kontur eines Zahnes entspricht, positioniert werden, und daß ein erheblicher Teil der Länge der Schneidteile (12) dieser Einsätze (10) bogenförmig ist, wobei die Anzahl der V-förmigen Lagebestimmungsflächen (32) gleich derjenigen der Einsätze (10) ist.

2. Fräser nach Anspruch 1, in dem der Einsatz-Aufnahmeteil (24) des weiteren eine Beilagscheiden-Tasche (34) und, in Drehrichtung gesehen, rückwärtig von jeder dieser Einsatz-Aufnahmepositionen (30) angeordnete Beilagscheiben (36) enthält, so daß der Boden jedes dieser Einsätze (10) an dem oberen Ende jeder dieser Beilagscheiben (36) anschlägt.

3. Fräser nach Anspruch 2, in dem jedes dieser Fächer (4) zwei Lagebestimmungsflächen (42) aufweist, die an zwei Lagebestimmungsflächen (44) des hinteren Teils (26) jedes Klemmhalters (22) anstoßen, wobei die Lagebestimmungsflächen (42) des Fachs und die Lagebestimmungsflächen (44) des Klemmhalters annähernd gleich in Richtung des Außenrandes des Fräserkörpers (2) konvergieren.

4. Fräser nach Anspruch 1 oder 3, in dem jeder der Keile (14) flache Auflageflächen (46) aufweist, um mit jedem dieser Einsätze (10) in Eingriff zu sein, und gegenüber der flachen Auflagefläche (46) ein abgerundete Oberfläche (48) aufweist, um mit einer annähernd gleich abgerundeten Oberfläche der Keil-Tasche (8) in Eingriff zu sein.

5. Konturenfräser nach Anspruch 4, in dem jedes dieser Fächer (4) einen Rinnenteil (52) für Späne, in Drehrichtung gesehen, vor der Reihe der Einsätze (10) aufweist, wobei der Radius des Fräserkörpers (2) bei jedem dieser Rinnenteile (52) für Späne verringert ist.

6. Konturenfräser nach Anspruch 5, in dem jeder dieser Einsätze (10) rund ausgebildet ist.

7. Verwendung eines Fräser-Klemmhalters in einem Konturenfräser nach einem der Ansprüche 1 bis 6.

8. Verfahren zum Montieren eines Konturenfräsers nach Anspruch 1 von Typ mit einem Fräserkörper (2), der mehrere Fächer (4) enthält, mehrere Klemmhalter (22) enthält, deren Anzahl gleich derjenigen der Fächer (4) ist und die einen hinteren Teil (26) und mehrere Einsatz-Aufnahmepositionen (30) aufweisen, und mit mehreren Keilen (14), deren Anzahl gleich derjenigen der Einsätze (10) ist, mit den Verfahrensschritten: Einführen eines Klemmhalters (22) in ein Fach (4) des Fräserkörpers (2) und Bewirken, daß die Lagebestimmungsflächen (42) des hinteren Teils (26) des Klemmhalters (22) mit zwei annähernd gleichen Lagebestimmungsflächen (44) im Fach (4) in Eingriff kommen; dadurch gekennzeichnet, daß für jeden Einsatz eine Reibe V-förmiger Lagebestimmungsflächen (32) vorgesehen wird, durch deren Winkelorientierungen die Schneidteile (12) der Einsätze (10) entlang einer der Kontur eines Zahnes entsprechenden Kurve (18) angeordnet werden, daß diese Einsätze (10) über einem erheblichen Teil der Länge des Schneidteils (12) in gekrümmter Form vorgesehen werden, daß jeder Einsatz (10) bezüglich einer V-förmigen Lagebestimmungsfläche (32) an der Hinterseite jeder Einsatz-Aufnahmeposition (30) in Stellung gebracht wird; daß ein Keil (14) zwischen jedem Einsatz (10) und dem entsprechenden Fach (4) derart zwischengefügt wird, daß aufgrund der Einwärtsbewegung jedes Keiles (14) jeder Einsatz (10) festgeklemmt wird; und jeder Verfahrensschritt mit einer Anzahl wiederholt wird, die gleich derjenigen der Fächer (4) des Fräserkörpers (2) ist; wobei der Klemmhalter (22) Beilagscheiben-Taschen (34) aufweist, deren Anzahl gleich derjenigen der Einsätze (10) ist, und wobei jede der beiden Lagebestimmungsflächen (42) des Fachs (4) in Richtung des Außenrandes des Fräserkörpers (2) konvergiert, wobei das Verfahren des weiteren den Verfahrensschritt des Anordnens einer Beilagscheibe (36) in jeder Beilagscheiben-Tasche (34) des Klemmhalters (22) enthält, derart, daß die Beilagscheibe (36) ein wenig über diese Beilagscheiben-Tasche (34) herausragt, und den Verfahrensschritt des Anordnens eines jeden Einsatzes (10) in einer jeweiligen Einsatz-Aufnahmeposition (30) am oberen Ende einer jeden Beilagscheibe (34) enthält.

## Revendications

1. Fraise à chantourner comprenant: un corps (2) ayant une série de poches (4) le long de sa périphérie; une rangée de plaquettes (10) placées chacune dans ces poches (4), chacune de ces plaquettes (10) ayant une partie coupante (12); et une pluralité de coins (14) en nombre égal au nombre de plaquettes (10), chacun de ces coins (14) étant placé entre une plaquette (10) et la poche (4) de façon que lorsqu'il est mû vers l'intérieur de la poche (4), la plaquette (10) soit solidement serrée lui et la poche (4), chacune des plaquettes (10) pouvant être positionnée de façon que sa partie coupante (12) dépasse de la périphérie du corps (2) de la fraise, chacune des plaquettes (10) étant alignée pour tailler un segment du contour lorsque le corps (2) tourne, des segments du contour voisins étant taillés par des plaquettes (10) placées dans des poches (4) différentes, et une pluralité de cartouches (22) en nombre correspondant au nombre de poches (4) du corps et destinées à être introduites dans celles-ci, chacune de ces cartouches (22) ayant une partie réceptrice de plaquettes (24) et une partie arrière (26), chaque poche (4) ayant une pluralité de logements de coin (8) faisant face à la périphérie du corps (2) et en nombre égal au nombre de coins (14) et de plaquettes (10), ces cartouches (22) étant placées dans chaque poche (4), dans le sens de rotation, entre la rangée de plaquettes (10) et la poche (4) de façon que chacune des plaquettes (10) s'appuie contre la surface d'appui (28) de la cartouche (22) et y soit solidement serrée par le coin (14) associé, chacune des cartouches (22) ayant des sièges (30) pour le positionnement des plaquettes (10), caractérisée par le fait que les sièges (30) de chaque cartouche (22) comprennent une suite de surfaces de positionnement en V (32) orientées pour positionner les parties coupantes (12) des plaquettes (10) le long d'une courbe (18) correspondant au contour d'une roue à chaîne, et qu'une partie importante de la longueur de la partie coupante (12) des plaquettes (10) est arquée, le nombre de surfaces de positionnement en V (32) étant égal au nombre de plaquettes (10).

2. Fraise selon la revendication 2, sur laquelle la partie réceptrice de plaquettes (24) comprend en outre un logement de cales (34) et des cales (36) placées en arrière, dans le sens de rotation, de chacun des sièges de plaquette (30) de façon que le dessous de chacune des plaquettes (10) s'appuie contre le dessus d'une cale (36).

3. Fraise selon la revendication 2, sur laquelle chacune des poches (4) a deux surfaces de positionnement (42) contre lesquelles sont appuyées deux surfaces de positionnement (44) de la partie arrière (26) de la cartouche (22), les surfaces de positionnement (42) de la poche et les surfaces de positionnement (44) de la cartouche convergeant de manière semblable vers la périphérie du corps (2) de la fraise.

4. Fraise selon l'une des revendications 1 et 3, dans laquelle chacun des coins (14) a une face d'appui plane (46) destinée à venir en prise avec la plaquette (10) associée et une surface arrondie (48) opposée à cette face d'appui plane (46) et destinée à venir en prise avec une surface arrondie de manière semblable du logement de coin (8).

5. Fraise à chantourner selon la revendication 4, sur laquelle chacune des poches (4) a une partie de logement des copeaux (52) on avant, dans le sens de rotation, de la rangée de plaquettes (10), le rayon du corps (2) de la fraise étant réduit à l'endroit de chacune des parties de logement des copeaux (52).

6. Fraise à chantourner selon la revendication 5, dans laquelle chacune des plaquettes (10) est ronde.

7. Cartouche telle qu'utilisée dans une fraise à chantourner selon l'une des revendications 1 à 6.

8. Procédé d'assemblage d'une fraise à chantourner selon la revendication 1, du type ayant un corps (2) pourvu d'une série de poches (4), une série de cartouches (22) en nombre égal au nombre de poches (4) et ayant une partie arrière (26) et une série de sièges de plaquettes (30), et une série de coins (14) en nombre égal au nombre de plaquettes (10), selon lequel on introduit une cartouche (22) dans une poche (4) du corps (2) de la fraise et applique des surfaces de positionnement (44) prévues sur la partie arrière (26) de la cartouche (22) contre deux surfaces de positionnement semblables (42) prévues dans la poche (4), caractérisé par le fait qu'on pourvoit chaque cartouche (22) d'une suite de surfaces de positionnement en V (32) orientées pour positionner les parties coupantes (12) des plaquettes (10) le long d'une courbe (18) correspondant au contour d'une roue à chaîne, on donne une forme arquée à une partie importante de la longueur de la partie coupante (12) des plaquettes (10), on positionne chaque plaquette (10) par rapport à une surface de positonnement en V (32) située à l'arrière de chaque siège de plaquette (30), on place un coin (14) entre chaque plaquette (10) et la poche (4) correspondante de façon que, lorsque ce coin (14) est mû vers l'intérieur, la plaquette (10) soit solidement serrée, et on répète chaque opération autant de fois qu'il y a de poches (4) dans le corps (2) de la fraise, chaque cartouche (22) ayant des logements de cale (34) en nombre égal au nombre de plaquettes (10), et les deux surfaces de positionnement (42) de la poche (4) convergeant vers la périphérie du corps (2) de la fraise, et, en outre, on place une cale (36) dans chaque logement de cale (34) de la cartouche (22) de façon que cette cale (36) dépasse légèrement au-dessus de ce logement (34), et l'on place une plaquette (10) dans chaque siège de plaquette (30) sur le dessus de la cale (36).

*Fig. 1*

Fig. 2

Fig. 3

Fig.4

Fig.5

Fig.6

Fig.7

6